# EUROPEAN PATENT SPECIFICATION

(11) **EP 3 839 919 B1**
(45) Date of publication and mention of the grant of the patent: **22.07.2026**
(21) Application number: 19383120.3
(22) Date of filing: 16.12.2019
(51) Int. Cl.: G08G 5/32, G08G 5/34, G08G 5/21, G08G 5/22, G08G 5/26, G08G 5/54, G08G 5/76

(54) **AIRCRAFT FLIGHT STRATEGY SELECTION SYSTEMS AND METHODS**
SYSTEME UND VERFAHREN ZUR AUSWAHL DER FLUGSTRATEGIE VON FLUGZEUGEN
SYSTÈMES ET PROCÉDÉS DE SÉLECTION DE STRATÉGIE DE VOL D'AÉRONEF

(43) Date of publication of application: 23.06.2021
(73) Proprietor: The Boeing Company, Arlington, VA 22202 (US)
(72) Inventor: La Civita, Marco, 28042 MADRID (ES); Vilaplana, Miguel, 28042 MADRID (ES)
(74) Representative: ZBM Patents - Zea, Barlocci & Markvardsen

(56) References cited:
- EP-A1- 3 104 119
- EP-A1- 3 154 047
- US-A1- 2016 093 217
- US-A1- 2017 132 942

## Description

### FIELD OF THE DISCLOSURE

Examples of the present disclosure generally relate to aircraft flight strategy selection systems and methods, such as may be used to select flight strategies for landing at an airport.

### BACKGROUND OF THE DISCLOSURE

Various types of aircraft are used to transport passengers and cargo between various locations. For example, an aircraft departs from a departure airport and flies to an arrival airport.

Each aircraft flies from a departure airport to an arrival airport according to a particular flight plan. The flight plan may include a strategy for flying into the arrival airport. The flight plan includes a path to the arrival airport, altitudes for the aircraft at various positions along the path, air speed for the aircraft at various positions along the path, and the like. On any given day, a flight plan may differ due to changing variables, such as weather (including air temperature, precipitation, wind speed and direction, etc.), a number of scheduled flights to the airport, governmental regulations (such as noise restrictions, restricted airspace, etc.), and the like. Accordingly, one or more air traffic controllers typically determine flight plans for various aircraft each day after reviewing the variables for that day.

As can be appreciated, the process of determining particular flight strategies is time consuming and tedious. For example, an air traffic controller needs to account for numerous variables, such as the weather, scheduled flights, regulations, and the like to determine flight strategies for all of the flights that are scheduled to arrive at a particular airport on a particular day. Document US2016093217 is entitled "automatic real-time flight plan updates".

### SUMMARY OF THE DISCLOSURE

A need exists for a system and a method for efficiently identifying one or more flight strategies for aircraft that are scheduled to arrive at an airport. Further, a need exists for a system and a method for automatically selecting one or more flight strategies for aircraft that are scheduled to arrive at an airport.

With those needs in mind, certain examples of the present disclosure provide an aircraft flight strategy selection system that is configured to determine one or more possible flight strategies for an aircraft at an airport. There is provided an aircraft flight strategy selection system according to claim 1.

A historical flight strategy database is in communication with the flight strategy analysis control unit. The historical flight strategy database stores historical flight strategy data regarding various flight strategies to the airport during the prior time frame. The flight strategy analysis control unit analyzes the historical flight strategy data for a prior time period that is similar to a selected time period being a current day and identifies one or more flight strategies for the prior time period as the possible flight strategy(s) for the selected time period. In at least one example, the flight strategy analysis control unit includes a strategies selection module that analyzes the historical flight strategy data and identifies the possible flight strategy(s) for the selected time period.

In at least one example, a historical weather database is in communication with the flight strategy analysis control unit. The historical weather database stores the historical weather data. The flight strategy analysis control unit compares the weather forecast data for the selected time period with the historical weather data. The flight strategy analysis control unit determines one or more time frames from the historical weather data having weather conditions that are at least substantially similar as weather conditions for the selected time period as determined via the weather forecast data. In at least one example, the flight strategy analysis control unit includes a conditions comparison module that analyzes the historical weather data and the weather forecast data.

In at least one example, a weather forecasting sub-system is in communication with the flight strategy analysis control unit. The flight strategy analysis control unit receives the weather forecast data from the weather forecasting sub-system.

A historical flight schedule database is in communication with the flight strategy analysis control unit. The historical flight schedule database stores the historical flight schedule data. The flight strategy analysis control unit compares the flight schedule data with the historical flight schedule data. The flight strategy analysis control unit determines one or more days or time periods from the historical flight schedule data having a prior flight schedule that is at least substantially similar as a future flight schedule as determined via the flight schedule data for the selected time period. In at least one example, the flight strategy analysis control unit includes a conditions comparison module that analyzes the historical flight schedule data and the flight schedule data.

In at least one example, a flight schedule sub-system is in communication with the flight strategy analysis control unit. The flight strategy analysis control unit receives the flight schedule data from the flight schedule sub-system.

In at least one example, an aircraft database is in communication with the flight strategy analysis control unit. The aircraft database stores aircraft data regarding the aircraft. The flight strategy analysis control unit analyzes the aircraft data to determine capabilities of the aircraft and aircraft capable flight strategies for the aircraft. In at least one example, the flight strategy analysis control unit includes an aircraft capabilities module that analyzes the aircraft data.

The flight strategy analysis control unit compares the possible flight strategy(s) for the selected time period in relation to one or more metrics including one or more of flight time, fuel consumption, or generated noise. In at least one example, the flight strategy analysis control unit includes a strategies comparison module that associates the metric(s) with the possible flight strategy(s) for the selected time period.

There is provided an aircraft flight strategy determination method according to claim 11.

In at least one example, the aircraft flight strategy determination method includes storing, in a historical flight strategy database that is in communication with the flight strategy analysis control unit, historical flight strategy data regarding various flight strategies to the airport during the prior time frame, analyzing, by the flight strategy analysis control unit, the historical flight strategy data for a prior time period that is similar to the selected time period, and identifying, by the flight strategy analysis control unit, one or more flight strategies for the prior time period as the possible flight strategy(s) for the selected time period.

In at least one example, the aircraft flight strategy determination method includes storing, in a historical weather database that is in communication with the flight strategy analysis control unit, the historical weather data, comparing, by the flight strategy analysis control unit, the weather forecast data for the selected time period with the historical weather data, and determining, by the flight strategy analysis control unit, one or more time frames from the historical weather data having weather conditions that are at least substantially similar as weather conditions for the selected time period as determined via the weather forecast data. In at least one example, the method also includes receiving the weather forecast data from a weather forecasting sub-system that is in communication with the flight strategy analysis control unit.

In at least one example, the aircraft flight strategy determination method includes storing, in a historical flight schedule database that is in communication with the flight strategy analysis control unit, the historical flight schedule data, comparing, by the flight strategy analysis control unit, the flight schedule data with the historical flight schedule data, and determining, by the flight strategy analysis control unit, one or more days or time periods from the historical flight schedule data having a prior flight schedule that is at least substantially similar as a future flight schedule as determined via the flight schedule data for the selected time period. In at least one example, the method also includes receiving, from a flight schedule sub-system that is in communication with the flight strategy analysis control unit, the flight schedule data.

In at least one example, the aircraft flight strategy determination method includes storing, in an aircraft database that is in communication with the flight strategy analysis control unit, aircraft data regarding the aircraft, and analyzing, by the flight strategy analysis control unit, the aircraft data to determine capabilities of the aircraft and aircraft capable flight strategies for the aircraft.

The aircraft flight strategy determination method includes comparing, by the flight strategy analysis control unit, the possible flight strategy(s) for the selected time period in relation to one or more metrics including one or more of flight time, fuel consumption, or generated noise.

### BRIEF DESCRIPTION OF THE DRAWINGS

Figure 1 illustrates a simplified representation of flight strategies for an aircraft to an airport.
Figure 2 is a schematic block diagram of a flight strategy selection system, according to an example of the present disclosure.
Figure 3 illustrates a flow chart of a flight strategy selection method, according to an example of the present disclosure.
Figure 4 is a diagrammatic representation of a front perspective view of the aircraft, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition may include additional elements not having that condition.

Certain examples of the present disclosure provide an aircraft flight strategy selection system and method that is configured to identify a group or cluster of flight strategies to an airport, and select one or more of the flight strategies based on particular conditions. In at least one example, the aircraft flight strategy selection system and method includes a flight strategy analysis control unit. In at least one example, the flight strategy analysis control unit includes one or more modules that generate (for example, retrieve) multiple possible flight strategies, groups the flight strategies into one or more clusters based on particular aircraft positions, selects one or more of the flight strategies based on one or more conditions based on particular metrics, and communicates with an individual (such as a pilot, air traffic controller, or the like) to allow the selected flight strategies to be changed.

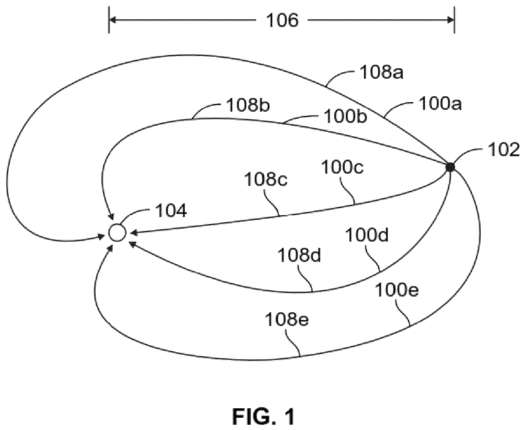

Figure 1 illustrates a simplified representation of flight strategies 100a, 100b, 100c, 100d, and 100e for an aircraft 102 to an airport 104. The flight strategies 100a, 100b, 100c, 100d, and 100e are a particular predetermined range 106 between the aircraft 102 and the airport 104. In at least one example, the range 106 is from a departure airport to the airport 104 (that is, the arrival airport 104). In at least one other example, the range 106 is less than a distance between the departure airport and the airport 104. For example, the range 106 is 100 miles. As another example, the range is 200 miles. As another example, the range is 50 miles. The range 106 may be greater than 200 miles, or less than 50 miles.

In at least one example, the flight strategies 100a, 100b, 100c, 100d, and 100e are previously flown paths to the airport 104 from a location within the range 106, such as the point represented by the aircraft 102. That is, the flight strategies 100a, 100b, 100c, 100d, and 100e are each historical flight paths including trajectories, airspeeds, altitudes, and the like at each point thereon. In at least one example, the flight strategies 100a, 100b, 100c, 100d, and 100e are not new or newly-formed flight strategies.

Figure 1 shows a set of flight strategies 100a, 100b, 100c, 100d, and 100e that have already been used to fly aircraft to the airport 104. A particular one of the flight strategies 100a, 100b, 100c, 100d, or 100e is selected for a current or future flight, as described herein. The set of flight strategies 100a, 100b, 100c, 100d, and 100e may include more or less flight strategies than shown.

Each flight strategy 100a, 100b, 100c, 100d, and 100e includes a flight route 108a, 108b, 108c, 108d, and 108e, respectively, to the airport 104, which include trajectories at various positions along each of the flight routes 108a, 108b, 108c, 108d, 108e, altitudes at various positions along each of the flight routes 108a, 108b, 108c, 108d, and 108e, and airspeeds at the various positions along each of the flight routes 108a, 108b, 108c, 108d, and 108e. The trajectories, airspeeds, and altitudes at different positions along each of the flight routes 108a, 108b, 108c, 108d, and 108e may differ. For example, the trajectory, airspeed, and altitude of the aircraft 102 at a position 100 miles from the airport 104 differs from the trajectory, airspeed and altitude of the aircraft 102 at a position immediately before landing at the airport 104.

The flight strategies 100a, 100b, 100c, 100d, and 100e differ based on various past conditions. For example, the flight strategies 100a, 100b, 100c, 100d, and 100e differ due to past weather conditions (including wind speed and direction, the presence of precipitation, air temperature, humidity, and/or the like), a flight schedule for a particular day (including the number of flights scheduled to land at the airport), and governmental regulations (for example, noise restrictions in relation to locations proximate to the airport 104, restricted airspace proximate to the airport 104, and/or the like).

The flight strategy 100c provides a relatively direct route to the airport 104. As such, the aircraft 102 that flies according to the flight strategy 100c generally consumes the least amount of fuel. However, the flight strategy 100c may not be an option on a particular day due to weather conditions (such as the presence of a storm in the flight route 108c).

The flight strategies 100a, 100b, 100d, and 100e provide longer flight routes 108a, 108b, 108d, and 108e than the flight route 108c of the flight strategy 100c, but are selected based on conditions that advise against the flight strategy 100c. For example, weather conditions may cause selection of a flight strategy 100a, 100b, 100d, or 100e to avoid storms, or based on a wind speed and direction at the airport 104.

While five different flight strategies 100a, 100b, 100c, 100d, and 100e are shown, more or less flight strategies than shown may be used over a particular time period. For example, on a particular day, a single flight strategy may be used. As another example, on a particular day, three flight strategies may be used. As another example, on a particular day, ten flight strategies may be used. As another example, over the course of a month, season, or year, hundreds, if not thousands of flight strategies may be used.

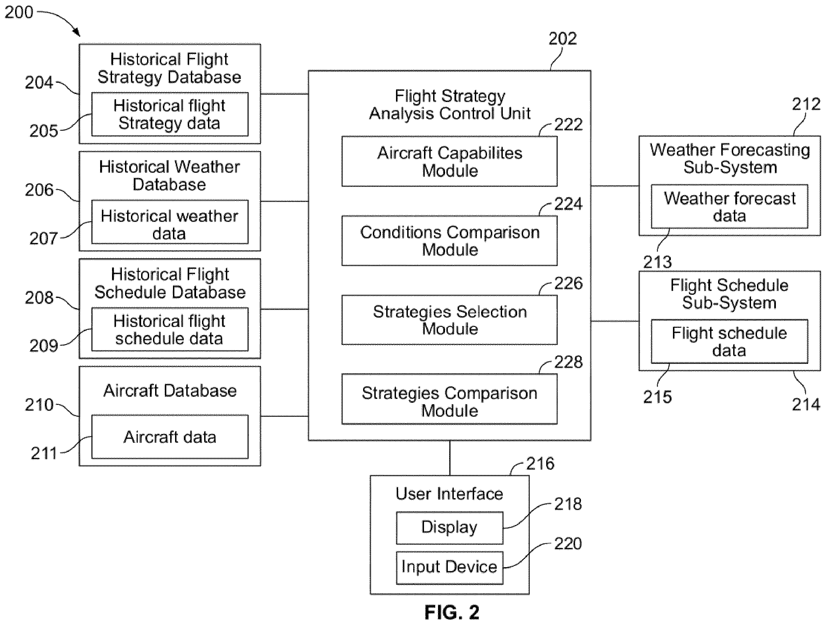

Figure 2 is a schematic block diagram of an aircraft flight strategy selection system 200, according to an example of the present disclosure. The aircraft flight strategy selection system 200 includes a flight strategy analysis control unit 202 in communication with a historical flight strategy database 204, a historical weather database 206, a historical flight schedule database 208, and an aircraft database 210, such as through one or more wired or wireless connections. In at least one example, the flight strategy analysis control unit 202 is collocated with the historical flight strategy database 204, the historical weather database 206, the historical flight schedule database 208, and the aircraft database 210. In at least one other example, the flight strategy analysis control unit 202 is remotely located from one or more of the historical flight strategy database 204, the historical weather database 206, the historical flight schedule database 208, and/or the aircraft database 210. In at least one example, the flight strategy analysis control unit 202 is in communication with less than all of the historical flight strategy database 204, the historical weather database 206, the historical flight schedule database 208, and the aircraft database 210.

The historical flight strategy database 204 stores historical flight strategy data 205. The historical flight strategy data 205 is or otherwise includes information regarding various flight strategies that have previously been used to route aircraft to the airport 104 (shown in Figure 1) during a prior time frame. The prior time frame may be a prior day, a week, a month, a year, or longer for a current day and time. As an example, the historical flight strategy database 204 stores historical flight strategy data 205 that dates back at least one year from a current time. The historical flight strategy data 205 may include tens, hundreds, thousands, or more flight strategies (such as the flight strategies 100a, 100b, 100c, 100d, and 100e) to the airport 104 over the prior time frame. The prior time frame or period may be selected by an individual via the user interface 216.

The historical weather database 206 stores historical weather data 207. The historical weather data 207 is or otherwise includes information regarding previous weather conditions (such as air temperature, humidity, precipitation, wind speed, wind direction, and the like) at or proximate (such as within the range 106 shown in Figure 1) the airport 104 during the prior time frame. As an example, the historical weather database 206 stores the historical weather data 207 that dates back at least one year from the current time.

The historical flight schedule database 208 stores historical flight schedule data 209 to the airport 104. The historical flight schedule data 209 is or otherwise includes information regarding the previous flight schedules to the airport 104 for each day within the prior time frame. As an example, the historical flight schedule database 208 stores the historical flight schedule data 209 that dates back at least one year from the current time.

The aircraft database 206 stores aircraft data 211. The aircraft data 211 is or otherwise includes information regarding the aircraft 102. For example, the aircraft data 211 includes aircraft type, maximum airspeed, maximum altitude, maximum weight, seating capacity, and the like for the aircraft 102.

In at least one example, the historical flight strategy database 204, the historical weather database 206, the historical flight schedule database 208, and the aircraft database 210 are separate and distinct databases. In at least one other example, the historical flight strategy database 204, the historical weather database 206, the historical flight schedule database 208, and the aircraft database 210 are part of an integrated database, with each of the databases 204, 206, 208, and 210 being portions of the integrated database.

The aircraft flight strategy analysis control unit 202 is also in communication with a weather forecasting sub-system 212 and a flight schedule sub-system 214, such as through one or more wired or wireless connections. In at least one example, the flight strategy analysis control unit 202 is remotely located from the weather forecasting sub-system 212 and the flight schedule sub-system 214. In at least one other example, the flight strategy analysis control unit 202 is collocated with one or both of the weather forecasting sub-system 212 or the flight schedule sub-system 214.

In at least one example, the weather forecasting sub-system 212 is a weather forecasting service that generates weather forecast data 213 for the current day or any time period for which flight strategies are to be determined. The weather forecast data 213 includes information regarding air temperature, humidity, precipitation, wind speed, wind direction, and the like at or proximate the airport 104 on a current or future day (in contrast to previous days, for which historical weather data 207 is stored in the historical weather database 206).

In at least one example, the flight schedule sub-system 214 is an aircraft schedule generation system for the airport 104. The flight schedule sub-system 214 generates flight schedule data 215 that includes information regarding scheduled flights that are to arrive at and depart from the airport 104 during a selected or otherwise relevant time period, such as a current day or future days.

The flight strategy analysis control unit 202 is also in communication with a user interface 216 through one or more wired or wireless connections. In at least one example, the user interface 216 is collocated with the flight strategy analysis control unit 202, such as a central monitoring location, which may be at the airport 104. In at least one other example, the user interface 216 is remotely located from the flight strategy analysis control unit 202. For example, the user interface 216 may be onboard the aircraft 102.

The user interface 216 includes a display 218 in communication with an input device 220, such as through one or more wired or wireless connections. The display 218 may be or otherwise include a monitor, screen, television, or the like. The input device 220 may be or otherwise include a keyboard, mouse, or the like. In at least one example, the display 218 and the input device 220 are integrated into a touchscreen interface. In at least one example, the user interface 216 is part of a computer workstation. In at least one other example, the user interface 216 is part of a handheld device, such as a smart phone, table, or other such device.

Referring to Figures 1 and 2, in operation, the flight strategy analysis control unit 202 determines one or more flight strategies for the aircraft 102 to arrive at the airport 104. For example, in at least one example, the flight strategy analysis control unit 202 identifies one or more previously-flow strategies that aircraft have flown to the airport 104. In at least one example, the flight strategy analysis control unit 202 does not generate a new flight strategy, but instead identifies previously-flown flight strategies.

Initially, a time period for selecting a flight strategy for an aircraft to an airport is selected. The time period may be a current day. In at least one other example, the time period may be less than an entire twenty four hours of a current or future day. In at least one other example, the time period may be longer than a current day, such as multiple days, a week, or longer. The relevant time period may be selected by an individual, such as via the user interface 216.

In at least one example, the flight strategy analysis control unit 202 receives the aircraft data 211 regarding the aircraft 102 from the aircraft database 210. The flight strategy analysis control unit 202 analyzes the aircraft data 211 to determine capabilities of the aircraft 102 and further capable flight strategies for the aircraft 102. The flight strategy analysis control unit 202 analyzes the aircraft data 211 to determine whether the aircraft 102 can fly according to a particular flight strategy, such as may have been previously flown to the airport 104 by another aircraft. The flight strategy analysis control unit 202 saves (such as in a memory) possible flight strategies (such as previously-flown flight strategies) that the aircraft 102 is capable of flying (that is, aircraft capable flight strategies, such as those having airspeeds and altitudes that are less than a maximum airspeed and a maximum altitude, respectively of the aircraft 102), and discards flight strategies that the aircraft 102 is incapable of flying (such as those having air speeds and altitudes that exceed a maximum airspeed and a maximum altitude, respectively, of the aircraft 102). For example, the flight strategy analysis control unit 202 may include an aircraft capabilities module 222, which may be a processing portion of the flight strategy analysis control unit 202. The aircraft capabilities module 222 analyzes the aircraft data 211 to determine the aircraft capable flight strategies.

The flight strategy analysis control unit 202 receives the weather forecast data 213 from the weather forecasting sub-system 212 and the flight schedule data 215 from the flight schedule sub-system 214. The flight strategy analysis control unit 202 compares the weather forecast data 213 and the flight schedule data 215 with the historical weather data 207 from the historical weather database 206 and the historical flight schedule data 209 from the historical flight schedule database 208 over a particular time frame, such as may be chosen by an individual via the user interface 216. The flight strategy analysis control unit 202 determines one or more days from the historical weather data 207 and the historical flight schedule data 209 having weather conditions and a flight schedule that are the same as, or substantially the same as (such as within a predetermined percentage of similarity, such as 90% or more the same, 80% or more the same, or the like) the weather conditions (as determined via the weather forecast data 213) and the flight schedule (as determined via the flight schedule data 215) of the current day. For example, current weather conditions are substantially similar with historical weather data 207 if the amount of precipitation, wind speed and direction, temperature, and the like are within a predetermined similarity percentage. Similarly between current conditions, times, flight schedules, and the like and respective stored data may be similarly determined. In at least one example, the flight strategy analysis control unit 202 may not analyze the flight schedule data 215 to determine similar conditions for the current day. For example, the flight strategy analysis control unit 202 may include a conditions comparison module 224, which may be a processing portion of the flight strategy analysis control unit 202. The conditions comparison module 224 analyzes current conditions for the current day (through the weather forecast data 213 and the flight schedule data 215) to determine conditions for similar days (in relation to a selected time period), such as through a comparison the current conditions data with the historical weather data 207 and the historical flight schedule data 209 and identifies a day having a close similarity to the current day (that is, a similar day).

After identifying the similar day, the flight strategy analysis control unit 202 analyzes the historical flight strategy data 205 for the similar day. The historical fight plan data 205 for the similar day includes one or more flight strategies for the aircraft 102 to the airport 104. For example, the historical flight strategy data 205 includes the flight strategies 100a, 100b, 100c, 100d, and 100e for the similar day. The flight strategy analysis control unit 202 identifies the flight strategies for the similar day as possible flight strategies for the current day. The possible flight strategies are in agreement with the aircraft capable flight strategies, such as determined by the aircraft capabilities module 222. That is, if the aircraft 102 is incapable of flying according to a particular flight strategy for the similar day, the flight strategy analysis control unit 202 discards such flight strategy for the aircraft 102. As an example, the flight strategy analysis control unit 202 may include a strategies selection module 226, which may be a processing portion of the flight strategy analysis control unit 202. The strategies selection module 226 identifies the flight strategies for the similar day as possible flight strategies for the current day.

After the possible flight strategies are determined, the flight strategy analysis control unit 202 compares the possible flight strategies for the current day in relation to one or more metrics. The metrics include one or more of flight time, fuel consumption, generated noise, and the like. For example, the flight strategy analysis control unit 202 determines that the aircraft 102 flying according to the flight strategy 100c arrives at the airport 104 the quickest (for example, the flight strategy 100c is the quickest flight strategy), the aircraft 102 flying according to the flight strategy 100a generates the least amount of noise in relation to the airport 104 or one or more locations proximate to the airport 104 (for example, the flight strategy 100a is the quietest flight strategy), while the aircraft 102 flying according to the flight strategy 100d consumes the least amount of fuel (for example, the flight strategy 100d is the most fuel efficient flight strategy). In at least one example, the flight strategy analysis control unit 202 presents the different possible flight strategies and associated metrics (for example, flight time, fuel consumption, and generated noise) to an individual on the display 218 of the user interface 216. As an example, the flight strategy analysis control unit 202 may include a strategies comparison module 228, which may be a processing portion of the flight strategy analysis control unit 202. The strategies comparison module 228 associates metrics with the possible flight strategies for the current day.

A user (such as an air traffic controller or a pilot) at the user interface 216 may select a desired possible flight strategy for the aircraft 102, such as via the input device 220. For example, the user may select one of the possible flight strategies based on a particular metric.

As shown, in at least one example, the flight strategy analysis control unit 202 includes the aircraft capabilities module 222, the conditions comparison module 224, the strategies selection module 226, and the strategies comparison module 228. The modules 222, 224, 226, and 228 may be processing portions of the flight strategy analysis control unit 202. In at least one module, the modules 222, 224, 226, and 228 may be integrated into a single processing unit. In at least one example, the flight strategy analysis control unit 202 may not include separate and distinct modules. Instead, the flight strategy analysis control unit 202 may perform the operations as described herein in an integrated manner.

As described herein, the current day is a time period analyzed by the flight strategy analysis control unit 202 that may be an entire 24 hour time period measured from 12 AM until 12 PM. Optionally, the time period may be less than entire 24 hour period of a day. For example, the time period may be an operational period for an aircraft for a particular day. As another example the time period may be selected, such as by an individual via the user interface 216, as a particular time period (such as a 2 hour time period) within a longer time period. In at least one example, the flight strategy analysis control unit 202 determines (for example, identifies) possible flight strategies for a time period (such as a current and/or future time period) that lasts one or more hours, a day, multiple days, a week, or multiple weeks based on forecasted weather data 213 and/or flight schedule data 215 for the relevant time period through an analysis of the historical flight strategy data 205, the historical weather data 207 and the historical flight schedule data 209.

As used herein, the term "control unit," "central processing unit," "unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the flight strategy analysis control unit 202 (and/or portions thereof) may be or include one or more processors that are configured to control operation thereof, as described herein.

The flight strategy analysis control unit 202 is configured to execute a set of instructions that are stored in one or more data storage units or elements (such as one or more memories), in order to process data. For example, the flight strategy analysis control unit 202 may include or be coupled to one or more memories. The data storage units may also store data or other information as desired or needed. The data storage units may be in the form of an information source or a physical memory element within a processing machine.

The set of instructions may include various commands that instruct the flight strategy analysis control unit 202 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the flight strategy analysis control unit 202. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the flight strategy analysis control unit 202 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include aspects of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

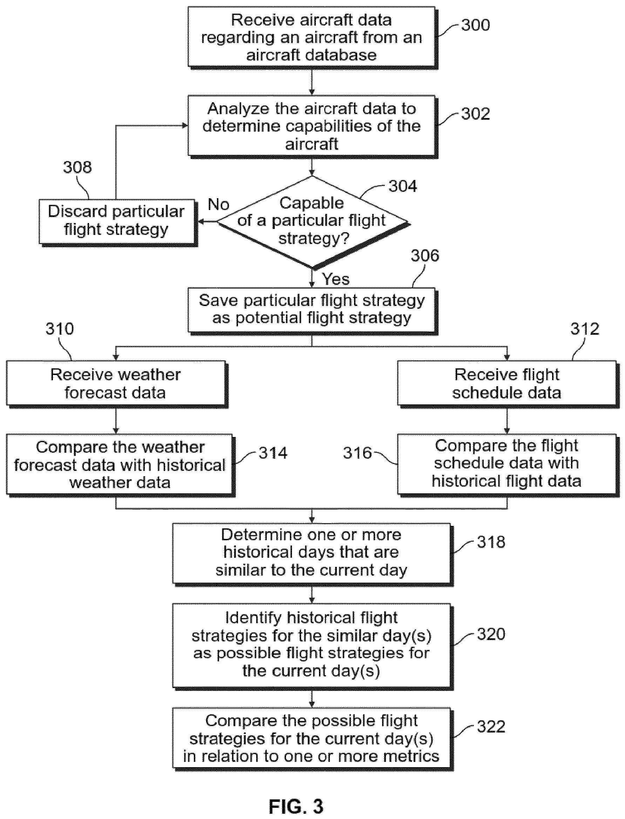

Figure 3 illustrates a flow chart of an aircraft flight strategy selection method, according to an example of the present disclosure. In at least one example, the flight strategy analysis control unit 202 operates according to the flow chart shown and described with respect to Figure 3.

Referring to Figures 1-3, at 300, the flight strategy analysis control unit 202 receives the aircraft data 211 regarding the aircraft 102 from the aircraft database 210. At 302, the flight strategy analysis control unit 202 analyzes the aircraft data 211 to determine capabilities of the aircraft 102. At 304, the flight strategy analysis control unit 202 determines, based on the aircraft data 211, whether the aircraft 102 is capable of flying according to a particular flight strategy. If the aircraft is capable of flying according to the particular flight strategy, such flight strategy is saved as a potential flight strategy at 306. If, however, the aircraft is incapable of flying according to the particular flight strategy, the particular flight strategy is discarded at 308, and the method returns to 302.

At 310, the flight strategy analysis control unit 202 receives the weather forecast data 213. At 312, the flight strategy analysis control unit 202 receives the flight schedule data 215 from the flight schedule sub-system 214. In at least one example, the method does not include 300-308, but begins at 310 and 312. In at least one other example, the method does not include 312.

At 314, the flight strategy analysis control unit 202 compares the weather forecast data 213 with the historical weather data 207 in relation to a particular time frame, such as may be chosen by an individual via the user interface 216. At 316, the flight strategy analysis control unit compares the flight schedule data with historical flight schedule data 209 in relation to a particular time frame, such as may be chosen by an individual via the user interface 216. In at least one example, the method may not include 316.

At 318, the flight strategy analysis control unit 202 determines one or more days from the historical weather data 207 and the historical flight schedule data 209 that are similar to the current day. For example, the flight strategy analysis control unit 202 determines one or more historical days having weather conditions and a flight schedule that are the same as, or substantially the same as (such as within a predetermined percentage of similarity, such as 90% or more similar) the weather conditions (as determined via the weather forecast data 213) and the flight schedule (as determined via the flight schedule data 215) of the current day.

At 320, after identifying the similar day, the flight strategy analysis control unit 202 identifies the flight strategies for the similar day(s) as possible flight strategies for the current day(s). After the possible flight strategies are determined (for example, identified), at 322, the flight strategy analysis control unit 202 compares the possible flight strategies for the current day in relation to one or more metrics.

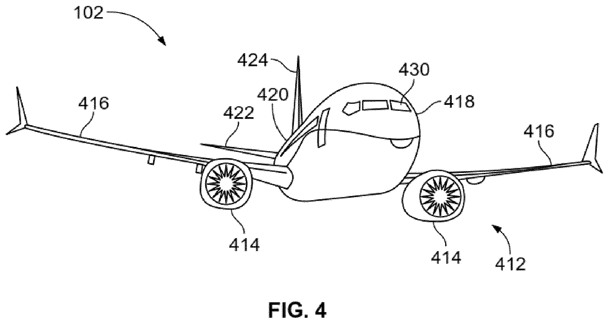

Figure 4 is a diagrammatic representation of a front perspective view of the aircraft 102, according to an example of the present disclosure. The aircraft 102 includes a propulsion system 412 that may include two turbofan engines 414, for example. Optionally, the propulsion system 412 may include more engines 414 than shown. The engines 414 are carried by wings 416 of the aircraft 102. In other examples, the engines 414 may be carried by a fuselage 418 and/or an empennage 420. The empennage 420 may also support horizontal stabilizers 422 and a vertical stabilizer 424. The fuselage 418 of the aircraft 102 defines an internal cabin, which may include a cockpit 430.

The aircraft 102 may be sized, shaped, and configured other than shown in Figure 4. For example, the aircraft 102 may be a non-fixed wing aircraft, such as a helicopter.

Examples of the present disclosure provide systems and methods that allow large amounts of data to be quickly and efficiently analyzed by a computing device. Large amounts of data are being tracked and analyzed. The vast amounts of data are efficiently organized and/or analyzed by the flight strategy analysis control unit 202, as described herein. The flight strategy analysis control unit 202 analyzes the data in a relatively short time in order to quickly and efficiently select one or more possible flight strategies. A human being would be incapable of efficiently analyzing such vast amounts of data in such a short time. As such, examples of the present disclosure provide increased and efficient functionality with respect to prior computing systems, and vastly superior performance in relation to a human being analyzing the vast amounts of data. In short, examples of the present disclosure provide systems and methods that analyze thousands, if not millions, of calculations and computations that a human being is incapable of efficiently, effectively and accurately managing.

Examples of the present disclosure provide systems and methods that provide decision-support tools that allow airlines, air traffic controllers, and the like to efficiently analyze flight operations, and identify specific flight procedures that provide effective flight strategies for arrival at an airport. In at least one example, the systems and methods identify a plurality of flight strategies, each of which may differ with respect to metrics including flight time, fuel consumption, noise restrictions, and the like. As such, in at least one example, a particular flight strategy is chosen based on emphasis of a particular metric (for example, the shortest flight time, the least amount of fuel consumption, or the lowest amount of noise generated in relation to a particular location).

As described herein, examples of the present disclosure provide systems and methods for efficiently selecting one or more flight strategies for aircraft that are scheduled to arrive at an airport. Further, examples of the present disclosure provide systems and methods for automatically selecting one or more flight strategies for aircraft that are scheduled to arrive at an airport.

While various spatial and directional terms, such as top, bottom, lower, mid, lateral, horizontal, vertical, front and the like may be used to describe examples of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) may be used in combination with each other. In addition, many modifications may be made to adapt a particular situation or material to the teachings of the various examples. While the dimensions and types of materials described herein are intended to define the parameters of the various examples of the disclosure, the examples are by no means limiting and are exemplary embodiments. Many other embodiments will be apparent to those of skill in the art upon reviewing the above description. In the appended claims, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various embodiments falling within the appended claims, including the best mode, and also to enable any person skilled in the art to practice the various embodiments of the claims, including making and using any devices or systems and performing any incorporated methods. The scope of protection of the various embodiments is defined by the appended claims.

## Claims

1. An aircraft flight strategy selection system (200) that is configured to identify one or more possible flight strategies (100a, 100b, 100c, 100d) for an aircraft (102) scheduled to arrive at an airport (104), the aircraft flight strategy selection system (200) comprising:
a flight strategy analysis control unit (202) configured to determine the one or more possible flight strategies (100a, 100b, 100c, 100d) for the aircraft (102) based on weather forecast data for a current day, flight schedule data for the current day, historical weather data for a prior time frame, and historical flight schedule data for the prior time frame;
a historical flight strategy database (204) in communication with the flight strategy analysis control unit (202), wherein the historical flight strategy database (204) stores historical flight strategy data regarding various flight strategies (100a, 100b, 100c, 100d) to the airport (104) during the prior time frame;
a historical weather database (206) in communication with the flight strategy analysis control unit (202), wherein the historical weather database (206) stores the historical weather data;
a historical flight schedule database (208) in communication with the flight strategy analysis control unit (202), wherein the historical flight schedule database (208) stores the historical flight schedule data;
wherein the flight strategy analysis control unit (202) is configured to:
compare the weather forecast data for the current day with the historical weather data stored in the historical weather database (206);
compare the flight schedule data of the current data with the historical flight schedule data stored in the historical flight schedule database (208);
determine one or more days from the historical weather data (207) and the historical flight schedule data (209) having weather conditions and a prior flight schedule that are at least substantially similar within 80% or more to the weather conditions and the flight schedule of the current day;
identifying flight strategies for the determined one or more days from the historical flight strategy database (204) as possible flight strategies for the current day;
associate one or more metrics with the one or more possible flight strategies (100a, 100b, 100c, 100d) for the current day, the said one or more metrics including one or more of flight time, fuel consumption, or generated noise;
compare the one or more possible flight strategies for the aircraft for the current day in relation to the one or more metrics with the possible flight strategies; and
present the possible flight strategies and associated metrics to an individual on a display (218) of a user interface (216) for selecting one of the possible flight strategies.

2. The aircraft flight strategy selection system (200) of claim 1, wherein the flight strategy analysis control unit (202) is configured to analyze the historical flight strategy data for a prior time period that is similar to the current day and identify one or more flight strategies (100a, 100b, 100c, 100d) for the prior time period as the one or more possible flight strategies (100a, 100b, 100c, 100d) for the current day.

3. The aircraft flight strategy selection system (200) of claim 2, wherein the flight strategy analysis control unit (202) comprises a strategies selection module (226) configured to analyze the historical flight strategy data and identify the one or more possible flight strategies (100a, 100b, 100c, 100d) for the current day.

4. The aircraft flight strategy selection system (200) of any one of claims 1 to 3, wherein the flight strategy analysis control unit (202) comprises a conditions comparison module (224) configured to analyze the historical weather data and the weather forecast data.

5. The aircraft flight strategy selection system (200) of any one of claims 1to 4, further comprising a weather forecasting sub-system (212) in communication with the flight strategy analysis control unit (202), wherein the flight strategy analysis control unit (202) is configured to receive the weather forecast data from the weather forecasting sub-system (212).

6. The aircraft flight strategy selection system (200) of any one of claims 1 to 5, wherein the flight strategy analysis control unit (202) comprises a conditions comparison module (224) configured to analyze the historical flight schedule data and the flight schedule data.

7. The aircraft flight strategy selection system (200) of any one of claims 1 to 6, further comprising a flight schedule sub-system (214) in communication with the flight strategy analysis control unit (202), wherein the flight strategy analysis control unit (202) is configured to receive the flight schedule data from the flight schedule sub-system (214).

8. The aircraft flight strategy selection system (200) of any one of claims 1 to 7, further comprising an aircraft database (210) in communication with the flight strategy analysis control unit (202), wherein the aircraft database (210) stores aircraft data regarding the aircraft (102), and wherein the flight strategy analysis control unit (202) is configured to analyze the aircraft data to determine capabilities of the aircraft (102) and aircraft capable flight strategies for the aircraft (102).

9. The aircraft flight strategy selection system (200) of claim 8, wherein the flight strategy analysis control unit (202) comprises an aircraft capabilities module (222) configured to analyze the aircraft data.

10. The aircraft flight strategy selection system (200) of any one of claims 1 to 9, wherein the flight strategy analysis control unit (202) comprises a strategies comparison module (228) configured to associate the one or more metrics with the one or more possible flight strategies (100a, 100b, 100c, 100d) for the current day.

11. An aircraft flight strategy determination method that is configured to determine one or more possible flight strategies (100a, 100b, 100c, 100d) for an aircraft (102) scheduled to arrive at an airport (104), the aircraft flight strategy determination method comprising:
determining, by a flight strategy analysis control unit (202), the one or more possible flight strategies (100a, 100b, 100c, 100d) for the aircraft (102) based on weather forecast data for a selected time period, flight schedule data for the selected time period, historical weather data for a prior time frame, and historical flight schedule data for the prior time frame by:
comparing weather forecast data for the current day with the historical weather data stored in a historical weather database (206);
comparing the flight schedule data of the current day with the historical flight schedule data stored in a historical flight schedule database (208);
determining one or more days from the historical weather data (207) and the historical flight schedule data (209) having weather conditions and a prior flight schedule that are at least substantially similar within 80% or more to the weather conditions and the flight schedule of the current day;
identifying flight strategies for the determined one or more days from a historical flight strategy database (204) as possible flight strategies for the current day;
associating one or more metrics with the one or more possible flight strategies (100a, 100b, 100c, 100d) for the current day, the said one or more metrics including one or more of flight time, fuel consumption, or generated noise;
comparing the one or more possible flight strategies for the aircraft for the current day in relation to the one or more metrics with the possible flight strategies; and
presenting the possible flight strategies and associated metrics to an individual on the display (218) of a user interface (216) for selecting one of the possible flight strategies.

12. The aircraft flight strategy determination method of claim 11 further comprising analyzing, by the flight strategy analysis control unit (202), the historical flight strategy data for a prior time period that is similar to the current day and identifying one or more flight strategies (100a, 100b, 100c, 100d) for the prior time period as the one or more possible flight strategies (100a, 100b, 100c, 100d) for the current day.

13. The aircraft flight strategy determination method of claim 12 further comprising analyzing, by the flight strategy analysis control unit (202), the historical flight strategy data and identifying the one or more possible flight strategies (100a, 100b, 100c, 100d) for the current day.

14. The aircraft flight strategy determination method of any one of claims 11 to 13 further comprising
storing, in an aircraft database that is in communication with the flight strategy analysis control unit, aircraft data regarding the aircraft; and
analyzing, by the flight strategy analysis control unit, the aircraft data to determine capabilities of the aircraft and aircraft capable flight strategies for the aircraft.

15. The aircraft flight strategy determination method of any one of claims 11 to 14 further comprising receiving the weather forecast data from a weather forecasting sub-system that is in communication with the flight strategy analysis control unit.

## Patentansprüche

1. Ein Flugzeugflugstrategie-Auswahlsystem (200), das konfiguriert ist, um eine oder mehrere mögliche Flugstrategien (100a, 100b, 100c, 100d) für ein Flugzeug (102) zu identifizieren, das planmäßig an einem Flughafen (104) ankommt, wobei das Flugzeugflugstrategie-Auswahlsystem (200) Folgendes umfasst:
eine Flugstrategieanalyse-Steuereinheit (202), die dazu konfiguriert ist, die eine oder die mehreren möglichen Flugstrategien (100a, 100b, 100c, 100d) für das Flugzeug (102) auf Grundlage von Wettervorhersagedaten für einen aktuellen Tag, Flugplandaten für den aktuellen Tag, historischen Wetterdaten für einen früheren Zeitrahmen und historischen Flugplandaten für den früheren Zeitrahmen zu bestimmen;
eine historische Flugstrategie-Datenbank (204) in Kommunikation mit der Flugstrategieanalyse-Steuereinheit (202), wobei die historische Flugstrategie-Datenbank (204) historische Flugstrategie-Daten in Bezug auf verschiedene Flugstrategien (100a, 100b, 100c, 100d) zum Flughafen (104) während des vorherigen Zeitrahmens speichert;
eine historische Wetterdatenbank (206) in Kommunikation mit der Flugstrategieanalyse-Steuereinheit (202), wobei die historische Wetterdatenbank (206) die historischen Wetterdaten speichert;
eine historische Flugplandatenbank (208) in Kommunikation mit der Flugstrategieanalyse-Steuereinheit (202), wobei die historische Flugplandatenbank (208) die historischen Flugplandaten speichert;
wobei die Flugstrategieanalyse-Steuereinheit (202) dazu konfiguriert ist:
die Wettervorhersagedaten für den aktuellen Tag mit den historischen Wetterdaten, die in der historischen Wetterdatenbank (206) gespeichert sind zu vergleichen;
die Flugplandaten der aktuellen Daten mit den historischen Flugplandaten, die in der historischen Flugplandatenbank (208) gespeichert sind zu vergleichen;
einen oder mehrere Tage aus den historischen Wetterdaten (207) und den historischen Flugplandaten (209) zu bestimmen, die Wetterbedingungen und einen früheren Flugplan haben, die innerhalb von 80 % oder mehr der Wetterbedingungen und des Flugplans des aktuellen Tages zumindest im Wesentlichen ähnlich sind;
Flugstrategien für den bestimmten einen oder die bestimmten mehreren Tage aus der historischen Flugstrategie-Datenbank (204) als mögliche Flugstrategien für den aktuellen Tag zu identifizieren;
eine oder mehrere Metriken mit der einen oder den mehreren möglichen Flugstrategien (100a, 100b, 100c, 100d) für den aktuellen Tag zu verknüpfen, wobei die eine oder die mehreren Metriken eine oder mehrere von Flugzeit, Kraftstoffverbrauch oder erzeugtem Lärm beinhalten;
die eine oder die mehreren möglichen Flugstrategien für das Flugzeug für den aktuellen Tag in Bezug auf die eine oder mehreren Metriken mit den möglichen Flugstrategien zu vergleichen; und
die möglichen Flugstrategien und zugehörigen Metriken einer Person auf einer Anzeige (218) einer Benutzerschnittstelle (216) zum Auswählen einer der möglichen Flugstrategien zu präsentieren.

2. Das Flugzeugflugstrategie-Auswahlsystem (200) von Anspruch 1, wobei die Flugstrategieanalyse-Steuereinheit (202) dazu konfiguriert ist, die historischen Flugstrategie-Daten für einen früheren Zeitraum zu analysieren, der dem aktuellen Tag ähnlich ist, und eine oder mehrere Flugstrategien (100a, 100b, 100c, 100d) für den früheren Zeitraum als die eine oder mehreren möglichen Flugstrategien (100a, 100b, 100c, 100d) für den aktuellen Tag zu identifizieren.

3. Das Flugzeugflugstrategie-Auswahlsystem (200) von Anspruch 2, wobei die Flugstrategieanalyse-Steuereinheit (202) ein Strategien-Auswahlmodul (226) umfasst, das dazu konfiguriert ist, die historischen Flugstrategie-Daten zu analysieren und die eine oder die mehreren möglichen Flugstrategien (100a, 100b, 100c, 100d) für den aktuellen Tag zu identifizieren.

4. Das Flugzeugflugstrategie-Auswahlsystem (200) von einem der Ansprüche 1 bis 3, wobei die Flugstrategieanalyse-Steuereinheit (202) ein Zustandsvergleichsmodul (224) umfasst, das dazu konfiguriert ist, die historischen Wetterdaten und die Wettervorhersagedaten zu analysieren.

5. Das Flugzeugflugstrategie-Auswahlsystem (200) von einem der Ansprüche 1 bis 4, ferner umfassend ein Wettervorhersage-Subsystem (212) in Kommunikation mit der Flugstrategieanalyse-Steuereinheit (202), wobei die Flugstrategieanalyse-Steuereinheit (202) dazu konfiguriert ist, die Wettervorhersagedaten von dem Wettervorhersageuntersystem (212) zu empfangen.

6. Das Flugzeugflugstrategie-Auswahlsystem (200) von einem der Ansprüche 1 bis 5, wobei die Flugstrategieanalyse-Steuereinheit (202) ein Zustandsvergleichsmodul (224) umfasst, das dazu konfiguriert ist, die historischen Flugplandaten und die Flugplandaten zu analysieren.

7. Das Flugzeugflugstrategie-Auswahlsystem (200) von einem der Ansprüche 1 bis 6, ferner umfassend ein Flugplanuntersystem (214) in Kommunikation mit der Flugstrategieanalyse-Steuereinheit (202), wobei die Flugstrategieanalyse-Steuereinheit (202) dazu konfiguriert ist, die Flugplandaten von dem Flugplanuntersystem (214) zu empfangen.

8. Das Flugzeugflugstrategie-Auswahlsystem (200) von einem der Ansprüche 1 bis 7, ferner umfassend eine Flugzeugdatenbank (210) in Kommunikation mit der Flugstrategieanalyse-Steuereinheit (202), wobei die Flugzeugdatenbank (210) Flugzeugdaten bezüglich des Flugzeugs (102) speichert, und wobei die Flugstrategieanalyse-Steuereinheit (202) dazu konfiguriert ist, die Flugzeugdaten zu analysieren, um Fähigkeiten des Flugzeugs (102) und flugzeugfähiger Flugzeugstrategien für das Flugzeug (102) zu bestimmen.

9. Das Flugzeugflugstrategie-Auswahlsystem (200) von Anspruch 8, wobei die Flugstrategieanalyse-Steuereinheit (202) ein Flugzeugfähigkeitsmodul (222) umfasst, das zum Analysieren der Flugzeugdaten konfiguriert ist.

10. Das Flugzeugflugstrategie-Auswahlsystem (200) von einem der Ansprüche 1 bis 9, wobei die Flugstrategieanalyse-Steuereinheit (202) ein Strategievergleichsmodul (228) umfasst, das dazu konfiguriert ist, die eine oder mehreren Metriken mit der einen oder den mehreren möglichen Flugstrategien (100a, 100b, 100c, 100d) für den aktuellen Tag zu verknüpfen.

11. Ein Flugzeugflugstrategie-Bestimmungsverfahren, das dazu konfiguriert ist, eine oder mehrere mögliche Flugstrategien (100a, 100b, 100c, 100d) für ein Flugzeug (102) zu bestimmen, das planmäßig an einem Flughafen (104) ankommt, wobei das Flugzeugflugstrategie-Bestimmungsverfahren Folgendes umfasst:
bestimmen der einen oder mehreren möglichen Flugstrategien (100a, 100b, 100c, 100d) für das Flugzeug (102) durch eine Flugstrategieanalyse-Steuereinheit (202) auf Grundlage von Wettervorhersagedaten für einen ausgewählten Zeitraum, Flugplandaten für den ausgewählten Zeitraum, historischen Wetterdaten für einen früheren Zeitrahmen und historischen Flugplandaten für den früheren Zeitrahmen durch:
vergleichen von Wettervorhersagedaten für den aktuellen Tag mit den historischen Wetterdaten, die in einer historischen Wetterdatenbank (206) gespeichert sind;
vergleichen der Flugplandaten des aktuellen Tages mit den historischen Flugplandaten, die in einer historischen Flugplandatenbank (208) gespeichert sind;
bestimmen eines oder mehrerer Tage aus den historischen Wetterdaten (207) und den historischen Flugplandaten (209), die Wetterbedingungen und einen früheren Flugplan haben, die innerhalb von 80 % oder mehr der Wetterbedingungen und des Flugplans des aktuellen Tages zumindest im Wesentlichen ähnlich sind;
identifizieren von Flugstrategien für den bestimmten einen oder die bestimmten mehreren Tage aus einer historischen Flugstrategie-Datenbank (204) als mögliche Flugstrategien für den aktuellen Tag;
verknüpfen einer oder mehrerer Metriken mit der einen oder den mehreren möglichen Flugstrategien (100a, 100b, 100c, 100d) für den aktuellen Tag, wobei die eine oder die mehreren Metriken eine oder mehrere von Flugzeit, Kraftstoffverbrauch oder erzeugtem Lärm beinhalten;
vergleichen der einen oder mehreren möglichen Flugstrategien für das Flugzeug für den aktuellen Tag in Bezug auf die eine oder mehreren Metriken mit den möglichen Flugstrategien; und
präsentieren der möglichen Flugstrategien und zugehörigen Metriken an eine Person auf der Anzeige (218) einer Benutzerschnittstelle (216) zum Auswählen einer der möglichen Flugstrategien.

12. Das Flugzeugflugstrategie-Bestimmungsverfahren von Anspruch 11, ferner umfassend analysieren, durch die Flugstrategieanalyse-Steuereinheit (202), der historischen Flugstrategiedaten für einen früheren Zeitraum, der dem aktuellen Tag ähnlich ist, und identifizieren einer oder mehrerer Flugstrategien (100a, 100b, 100c, 100d) für den früheren Zeitraum als die eine oder mehreren möglichen Flugstrategien (100a, 100b, 100c, 100d) für den aktuellen Tag.

13. Das Flugzeugflugstrategie-Bestimmungsverfahren von Anspruch 12, ferner umfassend analysieren der historischen Flugstrategiedaten durch die Flugstrategieanalyse-Steuereinheit (202) und identifizieren der einen oder der mehreren möglichen Flugstrategien (100a, 100b, 100c, 100d) für den aktuellen Tag.

14. Das Flugzeugflugstrategie-Bestimmungsverfahren von einem der Ansprüche 11 bis 13, ferner umfassend
speichern von Flugzeugdaten in Bezug auf das Flugzeug in einer Flugzeugdatenbank, die in Kommunikation mit der Flugstrategieanalyse-Steuereinheit steht; und
analysieren der Flugzeugdaten durch die Flugstrategieanalyse-Steuereinheit, um Fähigkeiten des Flugzeugs und flugzeugfähiger Flugstrategien für das Flugzeug zu bestimmen.

15. Das Flugzeugflugstrategie-Bestimmungsverfahren von einem der Ansprüche 11 bis 14, ferner umfassend das Empfangen der Wettervorhersagedaten von einem Wettervorhersageuntersystem, das in Kommunikation mit der Flugstrategieanalysesteuereinheit ist.

## Revendications

1. Un système de sélection de stratégie de vol d'aéronef (200) qui est configuré pour identifier une ou plusieurs stratégies de vol possibles (100a, 100b, 100c, 100d) pour un aéronef (102) devant arriver à un aéroport (104), le système de sélection de stratégie de vol d'aéronef (200) comprenant :
une unité de commande d'analyse de stratégie de vol (202) configurée pour déterminer la une ou les plusieurs stratégies de vol possibles (100a, 100b, 100c, 100d) pour l'aéronef (102) sur la base de données de prévision météorologique pour une journée en cours, de données de calendrier de vol pour la journée en cours, de données météorologiques historiques pour une période de temps antérieure et de données de calendrier de vol historiques pour la période de temps antérieure ;
une base de données de stratégie de vol historiques (204) en communication avec l'unité de commande d'analyse de stratégie de vol (202), dans lequel la base de données de stratégie de vol historiques (204) stocke des données de stratégie de vol historiques concernant diverses stratégies de vol (100a, 100b, 100c, 100d) vers l'aéroport (104) pendant la période de temps précédente ;
une base de données météorologiques historiques (206) en communication avec l'unité de commande d'analyse de stratégie de vol (202), dans laquelle la base de données météorologiques historiques (206) stocke les données météorologiques historiques ;
une base de données de calendrier de vol historiques (208) en communication avec l'unité de commande d'analyse de stratégie de vol (202), dans laquelle la base de données de calendrier de vol historiques (208) stocke les données de calendrier de vol historiques ;
dans lequel l'unité de commande d'analyse de stratégie de vol (202) est configurée pour :
comparer les données de prévision météorologique pour la journée en cours avec les données météorologiques historiques stockées dans la base de données météorologiques historiques (206) ;
comparer les données de calendrier de vol des données actuelles avec les données de calendrier de vol historiques stockées dans la base de données de calendrier de vol historiques (208) ;
déterminer un ou plusieurs jours à partir des données météorologiques historiques (207) et des données de calendrier de vol historiques (209) ayant des conditions météorologiques et un calendrier de vol antérieur qui sont au moins sensiblement similaires à 80 % ou plus aux conditions météorologiques et au calendrier de vol de la journée en cours ;
identifier des stratégies de vol pour le un ou les plusieurs jours déterminés à partir de la base de données de stratégie de vol historiques (204) en tant que stratégies de vol possibles pour la journée en cours ;
associer une ou plusieurs mesures à la une ou aux plusieurs stratégies de vol possibles (100a, 100b, 100c, 100d) pour la journée en cours, ladite une ou lesdites plusieurs mesures comprenant une ou plusieurs parmi le temps de vol, la consommation de carburant ou le bruit généré ;
comparer la une ou les plusieurs stratégies de vol possibles pour l'aéronef pour la journée en cours par rapport à la une ou aux plusieurs mesures avec les stratégies de vol possibles ; et
présenter les stratégies de vol possibles et les mesures associées à un individu sur un écran (218) d'une interface utilisateur (216) pour sélectionner l'une des stratégies de vol possibles.

2. Le système de sélection de stratégie de vol d'aéronef (200) de la revendication 1, dans lequel l'unité de commande d'analyse de stratégie de vol (202) est configurée pour analyser les données de stratégie de vol historiques pour une période de temps antérieure qui est similaire à la journée en cours et identifier une ou plusieurs stratégies de vol (100a, 100b, 100c, 100d) pour la période de temps antérieure en tant que la une ou les plusieurs stratégies de vol possibles (100a, 100b, 100c, 100d) pour la journée en cours.

3. Le système de sélection de stratégie de vol d'aéronef (200) de la revendication 2, dans lequel l'unité de commande d'analyse de stratégie de vol (202) comprend un module de sélection de stratégies (226) configuré pour analyser les données de stratégie de vol historiques et identifier la une ou les plusieurs stratégies de vol possibles (100a, 100b, 100c, 100d) pour la journée en cours.

4. Le système de sélection de stratégie de vol d'aéronef (200) de l'une quelconque des revendications 1 à 3, dans lequel l'unité de commande d'analyse de stratégie de vol (202) comprend un module de comparaison de conditions (224) configuré pour analyser les données météorologiques historiques et les données de prévision météorologique.

5. Le système de sélection de stratégie de vol d'aéronef (200) de l'une quelconque des revendications 1 à 4, comprenant en outre un sous-système de prévision météorologique (212) en communication avec l'unité de commande d'analyse de stratégie de vol (202), dans lequel l'unité de commande d'analyse de stratégie de vol (202) est configurée pour recevoir les données de prévision météorologique du sous-système de prévision météorologique (212).

6. Le système de sélection de stratégie de vol d'aéronef (200) de l'une quelconque des revendications 1 à 5, dans lequel l'unité de commande d'analyse de stratégie de vol (202) comprend un module de comparaison de conditions (224) configuré pour analyser les données de calendrier de vol historiques et les données de calendrier de vol.

7. Le système de sélection de stratégie de vol d'aéronef (200) de l'une quelconque des revendications 1 à 6, comprenant en outre un sous-système de planification de vol (214) en communication avec l'unité de commande d'analyse de stratégie de vol (202), dans lequel l'unité de commande d'analyse de stratégie de vol (202) est configurée pour recevoir les données de calendrier de vol du sous-système de calendrier de vol (214).

8. Le système de sélection de stratégie de vol d'aéronef (200) de l'une quelconque des revendications 1 à 7, comprenant en outre une base de données d'aéronef (210) en communication avec l'unité de commande d'analyse de stratégie de vol (202), dans lequel la base de données d'aéronef (210) stocke des données d'aéronef concernant l'aéronef (102), et dans lequel l'unité de commande d'analyse de stratégie de vol (202) est configurée pour analyser les données d'aéronef pour déterminer les capacités de l'aéronef (102) et les stratégies de vol capables de l'aéronef pour l'aéronef (102).

9. Le système de sélection de stratégie de vol d'aéronef (200) de la revendication 8, dans lequel l'unité de commande d'analyse de stratégie de vol (202) comprend un module de capacités d'aéronef (222) configuré pour analyser les données d'aéronef.

10. Le système de sélection de stratégie de vol d'aéronef (200) de l'une quelconque des revendications 1 à 9, dans lequel l'unité de commande d'analyse de stratégie de vol (202) comprend un module de comparaison de stratégies (228) configuré pour associer la une ou les plusieurs mesures à la une ou aux plusieurs stratégies de vol possibles (100a, 100b, 100c, 100d) pour la journée en cours.

11. Un procédé de détermination de stratégie de vol d'aéronef qui est configuré pour déterminer une ou plusieurs stratégies de vol possibles (100a, 100b, 100c, 100d) pour un aéronef (102) devant arriver à un aéroport (104), le procédé de détermination de stratégie de vol d'aéronef comprenant :
déterminer, par une unité de commande d'analyse de stratégie de vol (202), la une ou les plusieurs stratégies de vol possibles (100a, 100b, 100c, 100d) pour l'aéronef (102) sur la base de données de prévision météorologique pour une période de temps sélectionnée, des données de calendrier de vol pour la période de temps sélectionnée, des données météorologiques historiques pour une période de temps antérieure et des données de calendrier de vol historiques pour la période de temps antérieure en :
comparant les données de prévision météorologique pour la journée en cours avec les données météorologiques historiques stockées dans une base de données météorologiques historiques (206) ;
comparant les données de calendrier de vol de la journée en cours avec les données de calendrier de vol historiques stockées dans une base de données de calendrier de vol historiques (208) ;
déterminant un ou plusieurs jours à partir des données météorologiques historiques (207) et des données de calendrier de vol historiques (209) ayant des conditions météorologiques et un calendrier de vol antérieur qui sont au moins sensiblement similaires à 80 % ou plus aux conditions météorologiques et au calendrier de vol de la journée en cours ;
identifiant des stratégies de vol pour le un ou les plusieurs jours déterminés à partir d'une base de données de stratégie de vol historiques (204) en tant que stratégies de vol possibles pour la journée en cours ;
associant une ou plusieurs mesures à la ou aux plusieurs stratégies de vol possibles (100a, 100b, 100c, 100d) pour la journée en cours, ladite une ou lesdites plusieurs mesures comprenant une ou plusieurs parmi le temps de vol, la consommation de carburant ou le bruit généré ;
comparant la une ou les plusieurs stratégies de vol possibles pour l'aéronef pour la journée en cours par rapport à la une ou les plusieurs mesures avec les stratégies de vol possibles ; et
présentant les stratégies de vol possibles et les mesures associées à un individu sur l'écran (218) d'une interface utilisateur (216) pour sélectionner l'une des stratégies de vol possibles.

12. Le procédé de détermination de stratégie de vol d'aéronef de la revendication 11 comprenant en outre l'analyse, par l'unité de commande d'analyse de stratégie de vol (202), des données de stratégie de vol historiques pour une période de temps antérieure qui est similaire à la journée en cours et l'identification d'une ou de plusieurs stratégies de vol (100a, 100b, 100c, 100d) pour la période de temps antérieure en tant que la une ou les plusieurs stratégies de vol possibles (100a, 100b, 100c, 100d) pour la journée en cours.

13. Le procédé de détermination de stratégie de vol d'aéronef de la revendication 12 comprenant en outre l'analyse, par l'unité de commande d'analyse de stratégie de vol (202), des données de stratégie de vol historiques et l'identification de la une ou des plusieurs stratégies de vol possibles (100a, 100b, 100c, 100d) pour la journée en cours.

14. Le procédé de détermination de stratégie de vol d'aéronef de l'une quelconque des revendications 11 à 13, comprenant en outre
stocker, dans une base de données d'aéronef qui est en communication avec l'unité de commande d'analyse de stratégie de vol, des données d'aéronef concernant l'aéronef ; et
l'analyse, par l'unité de commande d'analyse de stratégie de vol, des données de l'aéronef pour déterminer des capacités de l'aéronef et des stratégies de vol capables de l'aéronef pour l'aéronef.

15. Le procédé de détermination de stratégie de vol d'aéronef de l'une quelconque des revendications 11 à 14, comprenant en outre la réception des données de prévision météorologique à partir d'un sous-système de prévision météorologique qui est en communication avec l'unité de commande d'analyse de stratégie de vol.
